# EUROPEAN PATENT SPECIFICATION

(11) **EP 3 000 584 B1**
(45) Date of publication and mention of the grant of the patent: **26.12.2018**
(21) Application number: 14185869.6
(22) Date of filing: 23.09.2014
(51) Int. Cl.: B29C 65/74, B65B 51/30, B29C 65/36, B65B 9/20, B65B 51/22

(54) **Sealing element for heat sealing packaging material for producing sealed packages**
Versiegelungselement zur Versiegelung mit Wärme von Verpackungsmaterial zur Herstellung versiegelter Verpackungen
Élément de scellage destiné au thermoscellage d'un matériau d'emballage pour produire des emballages scellés

(43) Date of publication of application: 30.03.2016
(73) Proprietor: Tetra Laval Holdings & Finance S.A., 1009 Pully (CH)
(72) Inventor: Rubini, Riccardo, IT-40026 Imola (IT); Palladino, Daniele, IT-42019 Scandiano (IT)
(74) Representative: Tetra Pak - Patent Attorneys SE

(56) References cited:
- EP-A1- 1 452 451
- EP-A1- 2 236 270
- WO-A1-85/04849
- US-A- 5 015 223
- US-A- 5 067 302

## Description

The present invention relates to a sealing element for heat sealing packaging material for producing sealed packages, in particular sealed packages of food product pourable within a tube of packaging material.

Many food products, such as fruit juice, pasteurized or UHT (ultra-high-temperature treated) milk, wine, tomato sauce, etc., are sold in packages made of sterilized packaging material.

A typical example of this type of package is the parallelepiped-shaped package for liquid or pourable food products known as Tetra Brik Aseptic (registered trademark), which is made by folding and sealing laminated strip packaging material.

The packaging material has a multilayer structure substantially comprising a base layer for stiffness and strength, which may be defined by a layer of fibrous material, e.g. paper, or mineral-filled polypropylene material; and a number of layers of heat-seal plastic material, e.g. polyethylene film, covering both sides of the base layer.

In the case of aseptic packages for long-storage products, such as UHT milk, the packaging material also comprises a layer of gas- and light-barrier material, e.g. aluminium foil or ethyl vinyl alcohol (EVOH) film, which is superimposed on a layer of heat-seal plastic material, and is in turn covered with another layer of heat-seal plastic material forming the inner face of the package eventually contacting the food product.

As is known, packages of this sort are produced on fully automatic packaging units, on which a continuous tube is formed from the web-fed packaging material; the web of packaging material is sterilized in the packaging unit, e.g. by applying a chemical sterilizing agent such as a hydrogen peroxide solution, which is subsequently removed, e.g. by heating and evaporation, from the surfaces of the packaging material.

The sterilized web of packaging material is maintained in a closed, sterile environment, and is folded into a cylinder and sealed longitudinally to form a tube.

The tube is fed in a first vertical direction parallel to its axis, is filled continuously with the sterilized or sterile-processed food product and is heat-sealed at equally spaced cross sections by pairs of jaws to form pillow packages each having a top and a bottom transverse sealing band, i.e. a band extending along a second direction orthogonal to the first direction.

The portion of the tube gripped between each pair of jaws is heat sealed by heating means carried by one of the jaws, known as the sealing jaw, and which locally melts the two layers of heat-seal plastic material gripped between the jaws.

For example, packaging material in which the layer of barrier material comprises a sheet of electrically conductive material, e.g. aluminium, is normally heat sealed by a so-called induction heat-sealing process, in which, when the tube is gripped by the two jaws, loss current is induced in, and locally heats, the aluminium sheet, thus melting the heat-seal plastic material locally.

In particular, in induction heat-sealing, the heating means substantially comprise an inductor powered by a high-frequency current generator and substantially comprising, in turn, one or more inductor bars made of electrically conductive material, extending parallel to the second direction, and which interact with the packaging material forming the tube to induce a loss current in the packaging material and heat the packaging material to the necessary sealing temperature.

The heating means are fitted to a sealing element carried by the sealing jaw.

The other jaw, known as the counter-jaw, comprises a counter-sealing element fitted with pressure pads made of elastomeric material, and which cooperate with the inductor bars to heat seal the packaging material forming the tube along a relative transverse sealing band.

Furthermore, the counter-jaw houses in sliding manner a cutting element. In particular, the cutting element may slide towards and away from the sealing element of the sealing jaw along a third direction orthogonal to the first direction and the second direction.

More precisely, the cutting element is normally maintained in a withdrawn rest position within the counter-sealing element, and is moved into a forward cutting position, in which the cutting element projects frontwards from the counter-jaw, engages a groove of the sealing element, and cuts along the centreline of the sealing band of the formed package. In this way, the formed package is separated from the tube.

A need is felt within the industry to avoid accumulation of residues within the groove of the sealing element. In fact, as it is received within the groove, the cutting element exerts a force on such residues resulting in the deformation of the sealing element. As a consequence, the life-time of the sealing element may be considerably reduced and there could be some risks of damaging the cutting element and/or the sealing element.

The residues may typically consist of portions of packaging material, in particular paper mixed with polyethylene.

In particular, the aforementioned need is particularly felt when a plurality of opening devices is pre-applied to the packaging material before the heat-sealing of packages and, during the heat-sealing of each package, the relative opening device is housed within a recess arranged in the sealing element of the sealing jaw.

In fact, during the starting cycles of the packaging units, the packaging material may be in an incorrect position with respect to the jaws, when cross sections of tube are heat sealed.

In this case, the opening devices, instead of being housed within the recess of the sealing element may remain, at least partially, along the trajectory of the cutting element between the withdrawn rest position and the forward cutting position.

In this way, some residues of the plastic material forming the opening device may be cut away by the cutting element and accumulate into the groove.

As a consequence, even when the packaging material has been placed in the correct position with respect to the jaws, the presence of residues of plastic material within groove may generate risks of deformation and/or damages of the sealing element and/or the cutting element.

In addition, the residues of plastic material may impair the quality of the heat-sealing operation and, in some cases, lead to non-sealed packages.

EP2236270 discloses a sealing element according to the preamble of claim 1.

EP1452451 discloses a sealing apparatus that comprises a heat seal jaw, a heat seal bar having two heaters arranged in parallel, being provided in a front edge of said heat seal jaw and having a working surface, a counter jaw disposed oppositely to the heat seal jaw, a counter rail provided to said counter jaw and having the working surface, a drive means for advancing/ retracting the heat seal jaw and counter jaw relatively, a heating means for actuating the heaters while clamping a packaging material by the working surface of the heat seal bar and the working of the counter rail and, a cutter section comprising of a cutter disposed at the position between the two heaters and a resilient counter cutter, and is characterized in that the counter cutter is held by a holding section provided on the working surface of the heat seal bar or the counter rail and projecting from the holding working surface.

US5015223 discloses that thermoplastic film bag making material is processed between a hotseal jaw and cutoff knife assembly. The apparatus has complementary first and second jaws between which the material is received for sealing bag side edge areas of the bag making material. The first jaw has a groove and the second jaw has a cutoff knife for extension into the groove for separating the material into individual bags. A rubber anvil block is in a groove underlying a zipper of the bag material and the knife thrusts into the block and attains substantially straight edges in the bag cutoff.

WO85/04849 discloses that an easy open and reclosable bag (10) has flexible sheet walls sealed together to form a pouch. A separable reclosure tie is located adjacent one of those seals. The reclosure tie is composed of extensions of the bag walls which have an integral channel-shaped molding spaced from that seal. A line of specially shaped, closely spaced apart perforations through the bag walls extends between the molding and the one seal to permit the reclosure tie to be separated from the pouch-defining walls of the bag. Apparatus for making the easy open and reclosable bag is also disclosed.

US5067302 discloses a sealing jaw structure and method for securing zippered package making foil or film material, comprising sealing jaws, one of which carries a pair of spaced material engaging ribs for not only sealing but also tightening the material between the ribs during sealing cooperation of the jaws. The tightening facilitates cutting of the material being engaged between the jaws by a knife carried reciprocably by the jaw that carries the ribs.

An object of the invention is to improve the sealing elements for heat sealing packaging material for producing sealed packages.

Another object of the invention is to obtain a sealing element for heat sealing packaging material in which the residues of plastic material forming the opening devices are substantially prevented from accumulating in a groove of the sealing element arranged to receive a cutting element that separates a sealed package from the packaging material.

According to the invention, there is provided a sealing element for heat-sealing packaging material for producing sealed packages as claimed in claim 1 and the use of a resilient element as a clogging preventing means for a groove of a sealing element for heat sealing packaging material for producing sealed packages as claimed in claim 9.

Some preferred, non-limiting embodiments of the invention will be described by way of example with reference to the accompanying drawings, in which:
Figure 1 shows a longitudinal cross section, with parts removed for clarity, of a packaging unit for producing sealed packages of pourable food products from a tube of packaging material;
Figure 1a is an enlarged detail of the packaging unit of Figure 1 showing a first embodiment of a sealing element;
Figure 1b is an enlarged detail of the packaging unit of Figure 1 showing a second embodiment of a sealing element;
Figures 2 to 5 are side views in cross section showing the packaging unit in subsequent steps of a package forming cycle during which the packaging material forming the package is heat sealed and cut.

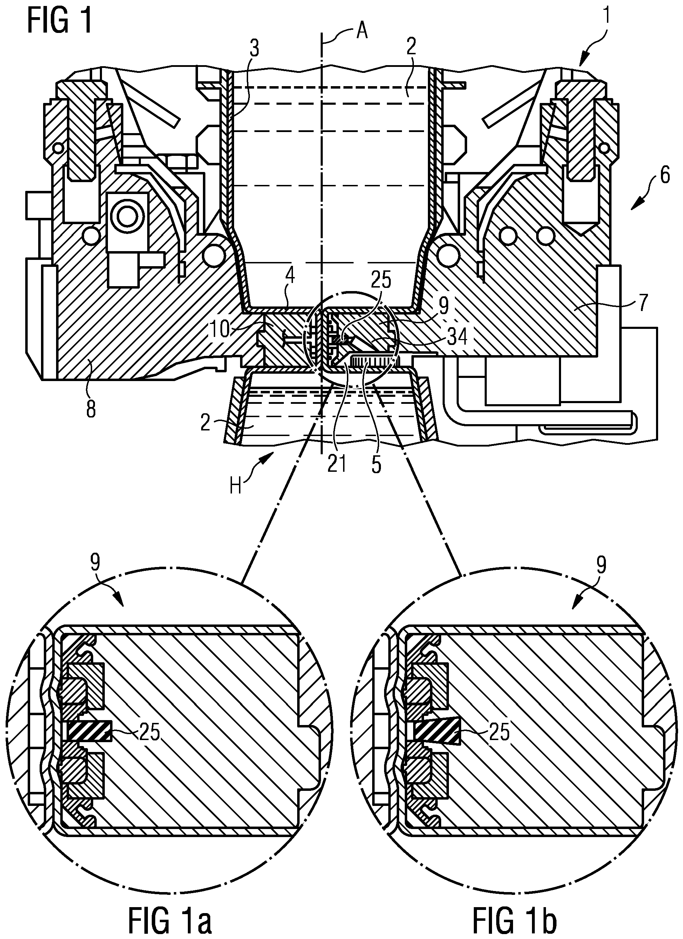

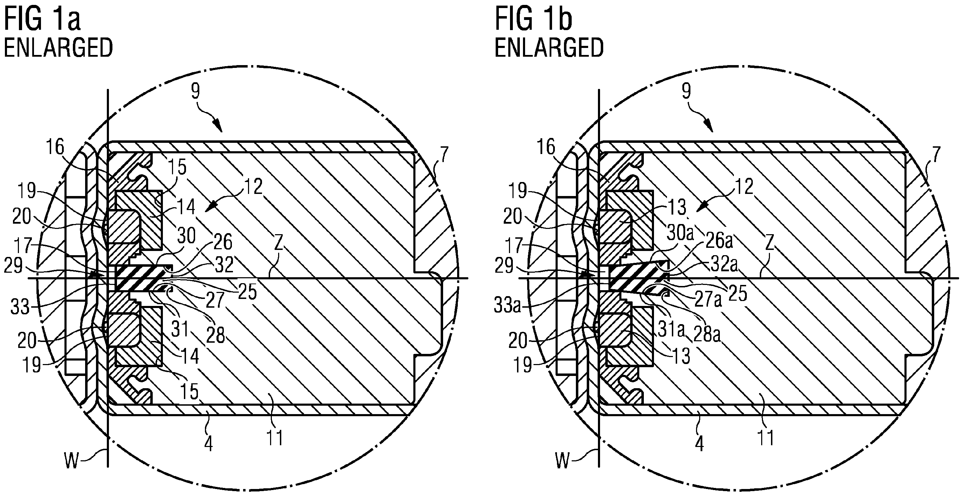

Figures 1 to 5 show a packaging unit 1 for producing sealed packages 2 of a food product from a tube 3 of sheet packaging material 4.

The packaging unit 1 preferably produces sealed packages 3 of a pourable food product, such as pasteurized or UHT milk, fruit juice, wine, etc.

The packaging material 4 has a multilayer structure (not shown) and comprises a layer of fibrous material, normally paper, covered on both sides with respective layers of heat-seal plastic material, e.g. polyethylene. In the case of aseptic packages for long-storage products, such as UHT milk, the packaging material 4 also comprises a layer of gas- and light-barrier material, e.g. aluminium foil or ethyl vinyl alcohol (EVOH) film, which is superimposed on a layer of heat-seal plastic material, and is in turn covered with another layer of heat-seal plastic material forming the inner face of the package 3 eventually contacting the food product.

The packaging material 4 is also provided with a plurality of equally spaced opening devices 5 (only one shown in Figure 1) arranged for allowing pouring of the pourable food product from the package 3. In particular, the opening devices 5 are obtained by moulding plastic material directly onto the packaging material 4 in a moulding station of the packaging unit 1. The plastic material is moulded onto the packaging material 4 when the packaging material 4 is in a substantially planar configuration, i.e. before the packaging material 4 is sterilized and folded to form the tube 2.

The tube 2 is formed in known manner by longitudinally folding and sealing the packaging material 4, is filled by a filling pipe (not shown) with the sterilized or sterile-processed food product, and is fed, in known manner not shown, along an advancing direction A.

The packaging unit 1 comprises forming assemblies 6, which grip the tube 2 at equally spaced cross sections and perform sealing and cutting operations on tube 2.

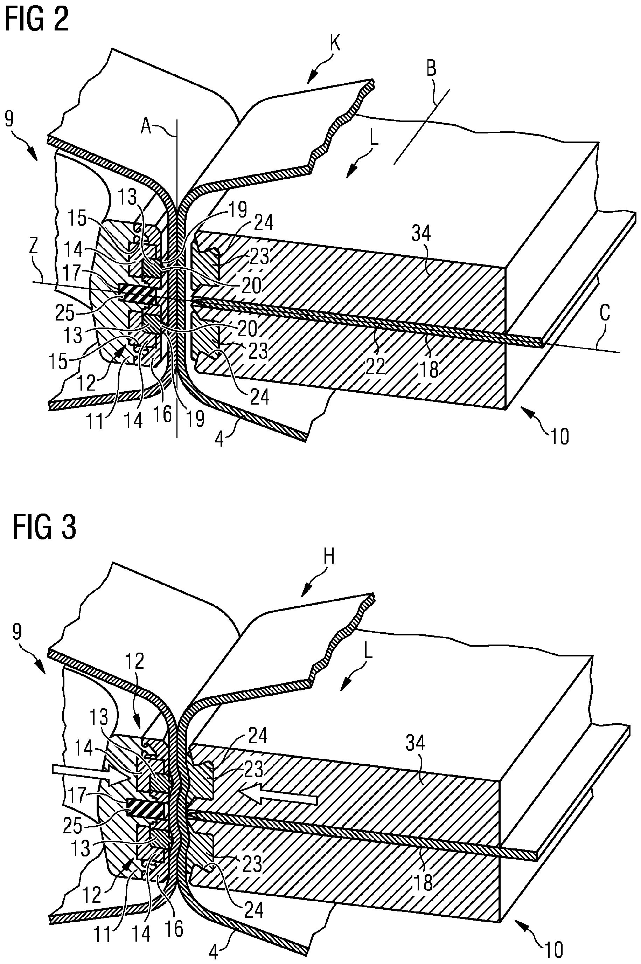

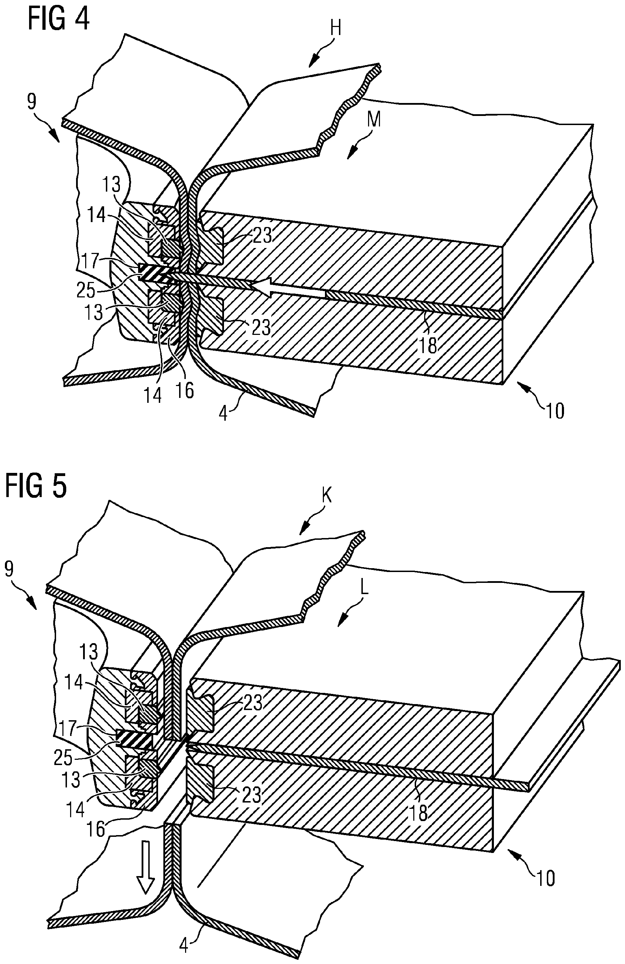

Each forming assembly 6 comprises a first jaw 7 and a second jaw 8 movable between a closed position H, shown in Figures 1, 3 and 4, and an open position K, shown in Figures 2 and 5.

In a version of the packaging unit 1, there are provided two forming assemblies 6, each forming assembly 6 moving with indexing motion along the advancing direction A. In particular, the packaging unit 1 comprises a couple of arms sliding on guides arranged parallel to the advancing direction A, each arm supporting a corresponding forming assembly 6.

In another version of the packaging unit 1, there is provided a plurality of forming assemblies 6, each forming assembly 6 moving continuously along the advancing direction A. In particular, the packaging unit 1 comprises a first chain and a second chain arranged on opposite sides of the tube 3. The first chain and the second chain are provided with a plurality of articulated link. The first chain and the second chain are arranged in such a way that a link of the first chain faces a corresponding link of the second chain. In addition, each link of the first chain supports the first jaw 7 of a forming assembly 6 and the corresponding link of the second chain supports the second jaw 8 of the same forming assembly 6.

The first jaw 7 comprises a sealing element 9. In particular, the sealing element 9 is an induction sealing element.

The first jaw 7, therefore, may be referred to as the sealing jaw.

The second jaw 8 comprises a counter-sealing element 10.

The second jaw 8, therefore, may be referred to as the counter-sealing jaw.

The first jaw 7 and the second jaw 8 perform, on each cross section of the tube 3 gripped therebetween, an induction heat-sealing operation and a cutting operation along the centreline of the cross section.

The sealing element 9 comprises a supporting body 11 connected to the first jaw 7.

The supporting body 11 comprises a recess 21, which is so configured as to be engaged by an opening device 5 pre-applied on the packaging material 4. The recess 21 prevents the opening device 5 from being clamped between - and therefore crushed by - the first jaw 7 and the second jaw 8, when the first jaw 7 and the second jaw 8 are in the sealing configuration, i.e. in the closed position H.

The sealing element 9 further comprises an induction element 12.

The induction element 12 is provided with two sealing bars 13 made of electrically conductive material and extending along a sealing direction B, substantially perpendicular to the advancing direction A, when the first jaw 7 and the second jaw 8 are in the sealing configuration, i.e. in the closed position H.

Each sealing bar 13 has a first end connected with a corresponding first end of the other bar 13 and a second end connected to a high-frequency current generator. In this way, the induction element 12 defines a coil along which the electric current supplied by the high-frequency current generator may flow.

The sealing element 9 further comprises two inserts 14 made of magnetic flux-concentrating material and fitted inside seats 15 of the supporting body 11.

Each insert 14 surrounds - at least partially - a corresponding sealing bar 13.

The induction element 12 and the inserts 14 are fitted to the supporting body 11 through an injected plastic element 16.

The sealing element 9 further comprises a groove 17 obtained in the supporting body 11 and arranged for receiving a cutting element 18 of the counter-sealing element 10, as it will be better described hereinafter.

The groove 17 extends in a plane Z parallel to the sealing direction B and substantially perpendicular to the advancing direction A, when the first jaw 7 and the second jaw 8 are in the sealing configuration, i.e. in the closed position H.

The sealing bars 13 are arranged on opposite sides of the groove 17. In particular, the sealing bars 13 are arranged symmetrically with respect to plane Z.

The inserts 14 are arranged on opposite sides of the groove 17. In particular, the inserts 14 are arranged symmetrically with respect to plane Z.

The sealing bars 13 interact with the tube 3 by means of active surfaces 19, which are elongated in the sealing direction B and extend in a further plane W perpendicular to plane Z. The active surfaces 19 are arranged symmetrically with respect to plane Z.

Further plane W defines a sealing plane along which the active surfaces 19 interact with the packaging material 4 during the heat-sealing operation.

The sealing bars 13 also comprise projections 20, elongated in the sealing direction B and extending from the active surfaces 19 to interact with the packaging material 4. The projections 20 may be continuous or segmented, extend along substantially the whole length of respective active surfaces 19. During heat-sealing operation the projection 20 locally increase the pressure on the tube 3.

As explained above, the counter-sealing element 10 comprises a cutting element 18.

The cutting element 18 is flat, is housed in sliding manner inside a front seat 22 of a supporting arrangement 34 of the counter-sealing element 10 and is movable along a cutting direction C, which is contained in plane Z, when the first jaw 7 and the second jaw 8 are in the sealing configuration, i.e. in the closed position H.

The cutting element 18 is activated in a known manner, not shown, by a driving element, for example a cam or a hydraulic cylinder.

The cutting element 18 is normally maintained in a withdrawn rest position L, shown in Figures 2, 3 and 5, in which the cutting element 18 is housed completely inside the supporting arrangement 34, and is moved by the driving element to a forward cutting position M, shown in Figure 4, in which the cutting element 18 projects frontwards from the supporting arrangement 34, engages the groove 17, and cuts along the centreline of the cross section of tube 3 being sealed.

The counter-sealing element 10 further comprises two pressure pads 23 made of heat-resistant elastomeric material, for example nitrile rubber, which are housed in respective front cavities 24 of the supporting arrangement 34.

The pressure pads 23 are arranged on opposite sides of the front seat 22. In particular, the pressure pads 23 are arranged symmetrically with respect to plane Z, when the first jaw 7 and the second jaw 8 are in the sealing configuration, i.e. in the closed position H.

In this way, each counter pad 23 cooperates, during heat-sealing operation, with a corresponding sealing bar 13, in particular with a corresponding active surface 19 and a respective projection 20.

The sealing element 9 further comprises a resilient element 25 received inside the groove 17 and arranged to prevent clogging particles from entering into the groove 17 and accumulating in the groove 17. The clogging particle may be residues of packaging material and/or plastic material forming the opening devices 5.

The counter element 25 is arranged to interact with the cutting element 18 during cutting operation.

Advantageously, the resilient element 25 is made of rubber. In particular, the resilient element is made of solid silicone.

The resilient element may have Shore hardness A in the range of 70 - 90.

In the embodiment shown in Figure 1a, the resilient element 25 has a substantially rectangular cross section and the groove 17 also has a substantially rectangular cross section.

In particular, the grove 17 has a first side wall 26 and a second side wall 27 parallel to each other and also parallel to plane Z. In addition, the groove 17 has a back wall 28 parallel to plane W, i.e. perpendicular to plane Z. Moreover, the groove has an opening 29, opposite to the back wall 28.

The resilient element 25 has a first side face 30 and a second side face 31 parallel to each other and also parallel to the plane Z, when the resilient element 25 is received in the groove 17. In addition, the resilient element 25 has a back face 32 and a front face 33 parallel to each other and to further plane W, i.e. perpendicular to plane Z, when the resilient element 25 is received in the groove 17.

The first side face 30 and the second side face 31 are arranged to interact, respectively, with the first side wall 26 and the second side wall 27. The back face 32 is arranged to interact with the back wall 28.

As shown in Figure 1a, the resilient element 25 is fully contained in the groove 17, in particular, the front face 33 does not project outside of the opening 29.

In the embodiment of Figure 1a, a layer of glue may be provided between the resilient element 25 and the groove 17 so as to prevent the resilient element 25 from disengaging from the groove 17.

In the embodiment shown in Figure 1b, the resilient element 25 has a substantially dovetail-shaped cross section and the groove 17 also has a substantially dovetail-shaped cross section.

In particular, the groove 17 has a back wall 28a parallel to plane W, i.e. perpendicular to plane Z. In addition, the groove 17 has an opening 29a, opposite to the back wall 28a. Moreover, the groove 17 has a first side wall 26a and a second side wall 27a converging towards each other when moving from the back wall 28a towards the opening 29a. The length of the back wall 28a measured parallel to further plane W is greater than the length of the opening 29a measured parallel to further plane W.

The resilient element 25 has a back face 32a and a front face 33a parallel to each other and to further plane W, i.e. perpendicular to plane Z, when the resilient element 25 is received in the groove 17. In addition, the resilient element 25 has a first side face 30a and a second side face 31a converging towards each other when moving from the back face 32a towards the front face 33a. The length of the back face 32a measured parallel to further plane W is greater than the length of the front face 33aa measured parallel to further plane W.

The first side face 30a and the second side face 31a are arranged to interact, respectively, with the first side wall 26a and the second side wall 27a. The back face 32a is arranged to interact with the back wall 28a.

As shown in Figure 1b, the resilient element 25 is fully contained in the groove 17, in particular, the front face 33a does not project outside of the opening 29a.

In the embodiment of Figure 1b, the resilient element 25 is forced into the groove 17 and is prevented from disengaging from the groove 17 due to the dovetail-shaped coupling.

In another embodiment, not shown, a resilient element 25 having a rectangular cross section, i.e. a resilient element 25 as shown in Figure 1a, may be used in combination with a groove 17 having a dovetail cross section, i.e. a groove 17 as shown in Figure 1b.

In this case the resilient element 25 is forced into the groove 17 and is prevented from disengaging from the groove due to interference.

With reference to Figures 2 to 5, in use, the tube 3, provided with the opening devices 5 and filled with the pourable food product, is fed along the advancing direction A and interacts with the forming assemblies 6.

When the first jaw 7 and the second jaw 8 are in the closed position H, the packaging material 4 arranged between the bars 13 of the sealing element 9 and the pressure pads 23 of the counter-sealing element 10 is heat-sealed to form a transversal sealing band of a package 2.

In the normal operation of the packaging unit 1, the motion of the packaging material 4 along the advancing direction A is perfectly synchronized with the motion of the first jaw 7 and the second 8 between the closed position H and the open position K.

Therefore, once the first jaw 7 and the second jaw 8 are in the closed position H a corresponding opening device 5 is received in the recess 21 of the supporting body 11.

The cutting element 18 is held in the withdrawn rest position L within the front seat 22 of the supporting arrangement 34 of the counter-sealing element 10, during heat-sealing of the cross section of tube 3.

Once the sealing element 9 has sealed the cross section of tube 3 and formed a transversal sealing band of the package 2, the cutting element 18 is moved to the forward cutting position M.

As a consequence, the cutting element 18 cuts along the centreline of the cross section of the tube 2 so separating the formed package 2 from the tube 3.

As it reaches the forward cutting position M, the cutting element 18 engages the groove 17.

In this way the, the cutting element 18 cuts through the resilient element 25 and may create a cut, or incision, in the resilient element 28. However, the resilient element 25 is not damaged by the cutting element 18. The two edges of the cut, or incision, in fact, are pressed one towards the other, due to the deformability of the resilient element 25.

In addition, the resilient element 25 acts as a counter element for the cutting element 18, so improving the cutting operation.

In the starting phase of the packaging unit 1, the packaging material 4 may be in an incorrect position, i.e. not yet synchronized, with respect to the first jaw 7 and the second jaw 8, when a cross section of the tube 3 is heat sealed.

In other words, when the first jaw 7 and the second jaw 8 are in the closed position H, the opening device 5 is not housed within the recess 21.

On the contrary, the opening device 5 remains along the trajectory of the cutting element 18.

In this situation, the cutting element 18 cuts through the opening device 5, so creating residues of the plastic material forming the opening device 5.

As cutting element 18 engages groove 17, the residues are prevented from entering and accumulating in the groove 17 by the resilient element 25.

In other words, the resilient element 25 acts a clogging preventing means that prevents the residues from obstructing the groove 17.

Owing to the invention, therefore, it is possible to reduce the risk of damaging the sealing element 8 and/or the cutting element 18 due to the presence of residues in the groove 17.

In addition, since no residues accumulate in the groove 17, the quality of the heat-sealing operation is improved and the risk of having non-sealed packages is reduced.

Moreover, since the resilient element 25 acts as a counter element for the cutting element 18 the quality of the cutting operation is improved.

Clearly, changes may be made to the sealing element 9 as described and illustrated herein without, however, departing from the scope of the present invention as defined in the accompanying claims.

In particular, the sealing element 9 may be equipped with different heating devices, for example a sonotrode or a heated bar.

## Claims

1. A sealing element for heat sealing packaging material (4) for producing sealed packages (3), said sealing element (9) comprising a heating element (12) arranged to heat-seal said packaging material (4) so as to form said sealed packages (4) and a groove (17) arranged to be engaged by a cutting element (18) carried by a counter-sealing element (10) interacting with said sealing element (9) during a cutting operation in which a sealed package (3) is separated from a portion of said packaging material (4), said sealing element (9) comprising a supporting body (11) having a recess (21) that is so configured as to be engaged by an opening device (5) pre-applied on said packaging material (4), **characterized in that** said sealing element (9) further comprises a resilient element (25) received within said groove (17) so as to prevent clogging particles from entering into said groove (17), wherein said clogging particles are residues of plastic material forming said opening devices (5) applied to said packaging material (4), and wherein said groove (17) has an opening (29; 29a) and said resilient element (25) is fully contained in said groove (17) and does not project outside of said opening (29; 29a).

2. A sealing element according to claim 1, wherein said resilient (25) element is made of rubber.

3. A sealing element according to claim 1, or, 2, wherein said resilient element (25) is made of solid silicone having Shore hardness A of 70-90.

4. A sealing element according to any one of the preceding claims, wherein said resilient element (25) acts as a counter element for said cutting element (18).

5. A sealing element according to any one of the preceding claims, wherein said resilient element (25) has a substantially rectangular cross section and said groove (17) has a substantially rectangular cross section.

6. A sealing element according to any one of claims 1 to 4, wherein said resilient element (25) has a substantially dovetail-shaped cross section and said groove (17) has a substantially dovetail-shaped cross section.

7. A sealing element according to any one of claims 1 to 4, wherein said resilient element (25) has a substantially rectangular cross section and said groove (17) has a substantially dovetail cross section.

8. A packaging unit for producing sealed packages (2) of a food product from a tube (3) of packaging material (4) fed in an advancing direction (A) and filled with said food product, said unit comprising a moulding station in which opening devices (5) are obtained by moulding plastic material directly onto said packaging material (4), a first jaw (5) and a second jaw (6) arranged to grip said tube (3) at spaced cross sections, a sealing element (9) and a counter-sealing element (10) fitted respectively to said first jaw (7) and second jaw (8) and arranged to heat-seal said packaging material (4) at said spaced cross sections, so as to form said sealed packages (3), said counter sealing element (10) comprising a cutting element (18) arranged to interact with said packaging material (4) for separating said packages (2) from said tube (3), **characterized in that** said sealing element (9) is a sealing element as claimed in any one of the preceding claims.

9. Use of a resilient element (25) as a clogging preventing means for a groove (17) of a sealing element (9) for heat sealing packaging material (4) for producing sealed packages (3), said groove (17) being arranged to be engaged by a cutting element (18) carried by a counter-sealing element (10) interacting with said sealing element (9) during a cutting operation in which a sealed package (3) is separated from a portion of said packaging material (4), wherein said sealing element (9) comprises a supporting body (11) having a recess (21) that is so configured as to be engaged by an opening device (5) pre-applied on said packaging material (4), wherein said resilient element (25) prevents residues of plastic material forming said opening devices (5) from entering into said groove (17), and wherein said groove (17) has an opening (29; 29a) and said resilient element (25) is fully contained in said groove (17) and does not project outside of said opening (29; 29a).

## Patentansprüche

1. Versiegelungselement zur Versiegelung von Verpackungsmaterial (4) mit Wärme, um versiegelte Packungen (3) herzustellen, wobei das Versiegelungselement (9) ein Heizelement (12), das angeordnet ist, um das Verpackungsmaterial (4) mit Wärme zu versiegeln, um so die versiegelten Packungen (4) zu bilden, und eine Rille (17) umfasst, die angeordnet ist, um in Eingriff mit einem Schneidelement (18) zu kommen, das von einem Gegensiegelelement (10) getragen wird, welches während eines Schneidvorgangs mit dem Versiegelungselement (9) interagiert, bei dem eine versiegelte Packung (3) von einem Anteil des Verpackungsmaterials (4) getrennt wird, wobei das Versiegelungselement (9) einen Haltekörper (11) mit einer Aussparung (21) umfasst, die so ausgestaltet ist, dass sie in Eingriff mit einer Öffnungsvorrichtung (5) kommen soll, die vorab auf das Verpackungsmaterial (4) aufgebracht worden ist, **dadurch gekennzeichnet, dass** das Versiegelungselement (9) ferner ein federndes Element (25) umfasst, das innerhalb der Rille (17) aufgenommen wird, um so verstopfende Partikel daran zu hindern, in die Rille (17) einzutreten, wobei die verstopfenden Partikel Reste von Kunststoffmaterial sind, welches die Öffnungsvorrichtungen (5) bildet, die auf das Verpackungsmaterial (4) aufgebracht werden, und wobei die Rille (17) eine Öffnung (29; 29a) aufweist und das federnde Element (25) vollständig in der Rille (17) enthalten ist und nicht aus der Öffnung (29; 29a) hervorragt.

2. Versiegelungselement nach Anspruch 1, wobei das federnde Element (25) aus Kautschuk gefertigt ist.

3. Versiegelungselement nach Anspruch 1 oder 2, wobei das federnde Element (25) aus festem Silikon mit einer Shore A-Härte von 70 bis 90 gefertigt ist.

4. Versiegelungselement nach einem der vorhergehenden Ansprüche, wobei das federnde Element (25) als Gegenelement für das Schneidelement (18) wirkt.

5. Versiegelungselement nach einem der vorhergehenden Ansprüche, wobei das federnde Element (25) einen im Wesentlichen rechteckigen Querschnitt aufweist und die Rille (17) einen im Wesentlichen rechteckigen Querschnitt aufweist.

6. Versiegelungselement nach einem der Ansprüche 1 bis 4, wobei das federnde Element (25) einen im Wesentlichen schwalbenschwanzförmigen Querschnitt aufweist und die Rille (17) einen im Wesentlichen schwalbenschwanzförmigen Querschnitt aufweist.

7. Versiegelungselement nach einem der Ansprüche 1 bis 4, wobei das federnde Element (25) einen im Wesentlichen rechteckigen Querschnitt aufweist und die Rille (17) einen im Wesentlichen schwalbenschwanzförmigen Querschnitt aufweist.

8. Verpackungseinheit zum Herstellen von versiegelten Packungen (2) eines Nahrungsprodukts aus einem Schlauch (3) aus Verpackungsmaterial (4), der in einer Vorrückrichtung (A) eingespeist wird und mit dem Nahrungsprodukt gefüllt wird, wobei die Einheit eine Formungsstation, in der Öffnungsvorrichtungen (5) erhalten werden, indem Kunststoffmaterial direkt auf das Verpackungsmaterial (4) geformt wird, eine erste Backe (5) und eine zweite Backe (6), die angeordnet sind, um den Schlauch (3) an beabstandeten Querschnitten zu greifen, ein Versiegelungselement (9) und ein Gegensiegelelement (10) umfasst, die an die erste Backe (7) beziehungsweise zweite Backe (8) gepasst sind und angeordnet sind, um das Verpackungsmaterial (4) an den beabstandeten Querschnitten mit Wärme zu versiegeln, um so die versiegelten Packungen (3) zu bilden, wobei das Gegensiegelelement (10) ein Schneidelement (18) umfasst, das zur Interaktion mit dem Verpackungsmaterial (4) angeordnet ist, um die Packungen (2) von dem Schlauch (3) zu trennen, **dadurch gekennzeichnet, dass** das Versiegelungselement (9) ein Versiegelungselement wie in einem der vorhergehenden Ansprüche ist.

9. Verwendung eines federnden Elements (25) als Verstopfung verhinderndes Mittel für eine Rille (17) eines Versiegelungselements (9) zum Versiegeln von Verpackungsmaterial (4) mit Wärme, um versiegelte Packungen (3) zu produzieren, wobei die Rille (17) angeordnet ist, um in Eingriff mit einem Schneidelement (18) zu kommen, welches durch ein Gegensiegelelement (10) getragen wird, welches während eines Schneidvorgangs, in dem eine versiegelte Packung (3) von einem Anteil des Verpackungsmaterials (4) getrennt wird, mit dem Versiegelungselement (9) interagiert, wobei das Versiegelungselement (9) einen Haltekörper (11) mit einer Aussparung (21) umfasst, die so ausgestaltet ist, dass sie mit einer Öffnungsvorrichtung (5) in Eingriff kommen soll, die zuvor auf das Verpackungsmaterial (4) aufgebracht worden ist, wobei das federnde Element (25) verhindert, dass Reste von Kunststoffmaterial, das die Öffnungsvorrichtungen (5) bildet, in die Rille (17) eintreten, und wobei die Rille (17) eine Öffnung (29; 29a) aufweist und das federnde Element (25) vollständig in der Rille (17) enthalten ist und nicht aus der Öffnung (29; 29a) hervorragt.

## Revendications

1. Élément de scellage destiné au thermoscellage d'un matériau d'emballage (4) pour produire des emballages scellés (3),
ledit élément de scellage (9) comprenant un élément chauffant (12) conçu pour thermosceller ledit matériau d'emballage (4) de manière à former lesdits emballages scellés (4), et une rainure (17) conçue de sorte que vienne s'y insérer un élément de coupe (18) supporté par un élément de contre-scellage (10) interagissant avec ledit élément de scellage (9) pendant une opération de coupage au cours de laquelle un emballage scellé (3) est séparé d'une partie dudit matériau d'emballage (4),
ledit élément de scellage (9) comprenant un corps de support (11) comportant un évidement (21) configuré pour recevoir un dispositif d'ouverture (5) pré-appliqué sur ledit matériau d'emballage (4),
l'élément de scellage étant **caractérisé en ce que** :
ledit élément de scellage (9) comprend en outre un élément élastique (25) reçu dans ladite rainure (17) de manière à empêcher l'introduction de particules de colmatage dans ladite rainure (17),
lesdites particules de colmatage étant des résidus de matière plastique formant lesdits dispositifs d'ouverture (5) appliqués sur ledit matériau d'emballage (4), et
ladite rainure (17) comportant une ouverture (29 ; 29a) et ledit élément élastique (25) étant contenu entièrement dans ladite rainure (17) et ne se projetant pas hors de ladite ouverture (29 ; 29a).

2. Élément de scellage selon la revendication 1, dans lequel ledit élément élastique (25) est en caoutchouc.

3. Élément de scellage selon la revendication 1 ou 2, dans lequel ledit élément élastique (25) est en silicone solide ayant une dureté Shore A de 70 à 90.

4. Élément de scellage selon l'une quelconque des revendications précédentes, dans lequel ledit élément élastique (25) agit en guise de contre-élément pour ledit élément de coupe (18).

5. Élément de scellage selon l'une quelconque des revendications précédentes, dans lequel ledit élément élastique (25) a une section transversale sensiblement rectangulaire, et ladite rainure (17) a une section transversale sensiblement rectangulaire.

6. Élément de scellage selon l'une quelconque des revendications 1 à 4, dans lequel ledit élément élastique (25) a une section transversale sensiblement en forme de queue-d'aronde, et ladite rainure (17) a une section transversale sensiblement en forme de queue-d'aronde.

7. Élément de scellage selon l'une quelconque des revendications 1 à 4, dans lequel ledit élément élastique (25) a une section transversale sensiblement rectangulaire, et ladite rainure (17) a une section transversale sensiblement en forme de queue-d'aronde.

8. Unité d'emballage destinée à produire des emballages scellés (2) d'un produit alimentaire à partir d'un tube (3) de matériau d'emballage (4) alimenté dans une direction d'avance (A) et rempli avec ledit produit alimentaire,
ladite unité comprenant un poste de moulage dans lequel des dispositifs d'ouverture (5) sont obtenus en moulant de la matière plastique directement sur ledit matériau d'emballage (4), une première mâchoire (5) et une seconde mâchoire (6) conçues pour saisir ledit tube (3) au niveau de sections transversales espacées, un élément de scellage (9) et un élément de contre-scellage (10) fixés respectivement à ladite première mâchoire (7) et à ladite seconde mâchoire (8) et conçus pour thermosceller ledit matériau d'emballage (4) au niveau de sections transversales espacées, de manière à former lesdits emballages scellés (3),
ledit élément de contre-scellage (10) comprenant un élément de coupe (18) conçu pour interagir avec ledit matériau d'emballage (4) pour séparer lesdits emballages (2) dudit tube (3), l'unité d'emballage étant **caractérisée en ce que** ledit élément de scellage (9) est un élément de scellage selon l'une quelconque des revendications précédentes.

9. Utilisation d'un élément élastique (25) en guise de moyen de prévention de colmatage pour une rainure (17) d'un élément de scellage (9) destiné au thermoscellage d'un matériau d'emballage (4) pour produire des emballages scellés (3),
ladite rainure (17) étant conçue de sorte que vienne s'y insérer un élément de coupe (18) supporté par un élément de contre-scellage (10) interagissant avec ledit élément de scellage (9) pendant une opération de coupage au cours de laquelle un emballage scellé (3) est séparé d'une partie dudit matériau d'emballage (4),
ledit élément de scellage (9) comprenant un corps de support (11) comportant un évidement (21) configuré pour recevoir un dispositif d'ouverture (5) pré-appliqué sur ledit matériau d'emballage (4),
ledit élément élastique (25) empêchant l'introduction de résidus de matière plastique formant lesdits dispositifs d'ouverture (5) dans ladite rainure (17), et
ladite rainure (17) comportant une ouverture (29 ; 29a) et ledit élément élastique (25) étant contenu entièrement dans ladite rainure (17) et ne se projetant pas hors de ladite ouverture (29 ; 29a).
